# EUROPEAN PATENT APPLICATION

(11) **EP 3 570 528 A1**
(43) Date of publication of application: **20.11.2019**
(21) Application number: 18176108.1
(22) Date of filing: 05.06.2018
(51) Int. Cl.: H04M 3/436, H04M 3/22, H04M 7/00, H04L 29/06

(54) **LIVE NETWORK UTILIZATION INEFFICIENCY AND ABUSE DETECTION PLATFORM FOR A TELEPHONY NETWORK**

(30) Priority: 15.05.2018 US 201815979859
(71) Applicant: Levi, Dinor Adam Vestergaard, Barcelona (ES)
(72) Inventor: LEVI, Dinor Adam Vestergaard, Barcelona (ES); HALPERIN, Arik, Pardesia (IL); TRABELSI, Yariv, Rehovot (IL)
(74) Representative: Harden, Henry Simon

(57) **Abstract**

A processor of a detection server coupled to a telephony network may be configured to detect a call event that is currently ongoing. The processor may be configured to analyze call data associated with the call event to determine that a call triggering the call event will cause an inefficiency on the telephony network in response to standard handling of the call by the telephony network. The processor may be configured to cause the telephony network to handle the call in a non-standard manner, thereby preventing the inefficiency.

## Description

### CROSS-REFERENCE TO RELATED APPLICATIONS

This application is based on and derives the benefit of the filing date of United States Patent Application No. 15/979,859, filed May 15, 2018. The entire content of this application is herein incorporated by reference in its entirety.

### BRIEF DESCRIPTION OF THE DRAWINGS

Figure 1 shows an example inefficiency and abuse platform according to an embodiment of the disclosure.
Figure 2 shows an example server according to an embodiment of the disclosure.
Figure 3 shows an example call analysis and classification process according to an embodiment of the disclosure.
Figure 4 shows an example time zone rules testing process according to an embodiment of the disclosure.
Figure 5 shows an example geolocation rules testing process according to an embodiment of the disclosure.
Figure 6 shows an example delayed hangup testing process according to an embodiment of the disclosure.
Figure 7 shows an example voice testing process according to an embodiment of the disclosure.
Figure 8 shows an example call escalation state diagram according to an embodiment of the disclosure.
Figure 9 shows an enforcement process according to an embodiment of the disclosure.
Figure 10 shows a heuristic table according to an embodiment of the disclosure.

### DETAILED DESCRIPTION OF SEVERAL EMBODIMENTS

Systems and methods described herein may facilitate real time detection and prevention of network utilization inefficiencies and abuse within a telephony network. For example, a platform disclosed herein may be able to alert sellers of telephony service providers that call traffic that may cause network utilization inefficiencies and abuse (e.g., an abusive and/or network-inefficient transaction) is being attempted or performed on their network and/or block the call traffic from progressing through the network.

The platform may be able to classify calls being performed as inefficient and/or abusive by utilizing a set of configurable rules, heuristics and/or machine-learned data from actual traffic. Voice traffic may be declared inefficient and/or abusive by the system if it produces a pattern significantly different than regular VoIP traffic and/or carries similar characteristics to inefficient and/or abusive characteristics as defined by system or the machine learned data, for example. The system may be able to detect inefficient and/or abusive traffic as it happens live and prevent inefficient and/or abusive activity from affecting network traffic and/or performance. Examples of possible inefficient and/or abusive activity may include, but are not limited to, the following:
- Calls from or to numbers not part of the defined telephony system
- Proporionately abnormal numbers of calls in irregular hours of the day (for example, calls between one zone at 3 AM to another zone at 6 AM)
- Unproportional number of calls between areas of population
- Unproportional number of calls from or to a set of numbers for longer than usual or for very short durations

The following definitions and principles may be useful for understanding the systems and methods described herein:
i. Detection in the platform described herein may be defined using a set of rules that detail how a call can be classified as abusive or causing network inefficiency.
ii. Inbound Carriers: carriers that receive calls and use the platform to validate them.
iii. Outbound Carriers: carriers that are the targets of calls checked by the platform.
iv. Signaling Server: the gateway to the telephony system, handles telephony network signaling.
v. Region: the telephony system can be deployed in several geographical regions, and each region can have a signaling server responsible for ingress telephony traffic.
vi. Regional Server: server used by signaling server for the purpose of classification of calls as abusive or causing network inefficiency and classification of calls as legitimate calls
vii. Central Server: a server for the abusive or network-inefficiency detection system that contains the master databaseof the system.
viii. Legitimate Call: A call which is part of the normal traffic of a telephony system and not intended to abuse the system or cause inefficiency
ix. Call Record Table: contains a record of calls, the time they were made, the source and detination time zones, and source and destination geo locations.
x. Time Zone Rules Table: contains pairs of time zones for each hour and each day of the year, stating the maximum expected number of calls between time zones for every day and hour.
xi. Geolocation Rules Table: contains pair of geolocations for each hour and each day of the year, stating the maximum expected number of calls between pairs of geo locations for each day and hour.
xii. Heuristic: a rule which declares a call as abusive or network-inefficient if it has certain properties.
xiii. Failure Policy Table: a policy defining whether to drop a call or not based on its outbound and inbound carriers.
xiv. Abuse Decision Components: a group of decision blocks, each of which a call must be approved by in order for the call to be declared as an acceptable call.
xv. Traffic Analyzer: a computer that sees protocol events and traffic data and generates events related to calls.
xvi. Phone Number Database: a database containing data on phone numbers, listing the valid possible numbers and each number's geo location and time zone.
xvii. False Answer Supervision (FAS): a situation where the receiver of the call simulates a false answer to the call in order to trigger a false charge for call time.
xviii. Wangiri Network Abuse: a type of network abuse where the network abuster sends calls from a specific set of numbers to destination numbers and disconnects before the recipient can answer, in an attempt to receive a call back.
xix. Cancel Time: the duration between call initiation and the time the call is canceled from the originator side.
xx. Delayed Hangup: a situation where the callee delayes the response to hangup in order to artificially extend the call.
xxi. Degree of freedom in dialed number pattern: The number of digits from the right side of the number which are not part of the pattern. For example a pattern of 5 digits for a 6 digits number has 1 degree of freedom, a pattern of 4 digits has 2 degrees of freedom
xxii. Call Window: A period in time in which every call initiated is said to belong to the window
xxiii. Call Window Duration: The length of a call window
xxiv. Trim(n) operation: The process of removing n digits from the right side of a number. If we use a number of size N=m+n, and we execute N.trim(n), we will get a sequence S of size m. We can then say that S = N.trim(n)
xxv. Call Initiation: The process of dialing a number, where after initiation the initiator is waiting for call acceptance or rejection.
xxvi. Call Finish: The process of terminating of a call, occurring when one of the parties signals it wants to terminate the call and the other party acknowledges this.

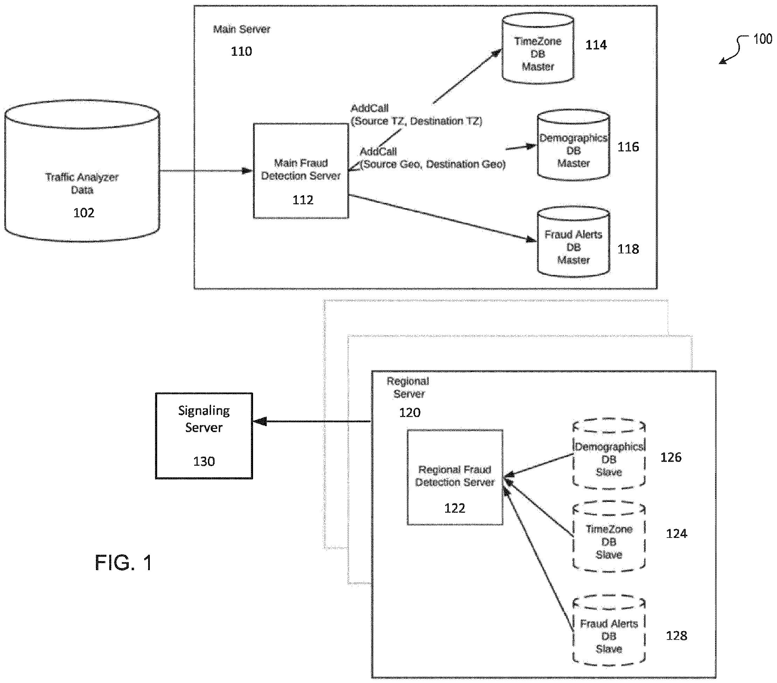

Figure 1 shows an example inefficiency and abuse platform 100 according to an embodiment of the disclosure. Platform 100 may include at least one main server 110 and/or at least one regional server 120. For example, platform 100 may include a single main server 110 or a plurality of main servers 110 configured to function collectively or individually as central components of platform 100. Platform 100 may include at least one regional server 120 in each region of a telephony network. Regions may be divided in any way. For example, there may be a regional server 120 in each geographic area, such as each country, each city, or some other regional division.

Main server 110 may receive call data 102 from a traffic analyzer. Main server 110 may include a detection module 112 configured to analyze data 102 and raise alerts when data 102 indicates a call may be network abusive. Module 112 may use data from time zone database 114 and/or demographics database 116 to analyze data 102. Alerts may be sent to regional servers 120 for enforcement and/or may be stored (e.g., in alerts database 118). For example, main server 110 may record calls with their geo locations and time zones and timings for start of call, time of end request, and end of call. Alert generation is described in detail below. Example situations wherein alerts may be raised may include, but are not limited to, the following:
- Suspected FAS by using voice analysis or abuse detection heuristics
- Delayed hang-up
- Abusive call patterns
- Irregular frequency of calls between geolocations
- Irregular frequency of calls between time zones

Each regional server 120 may include regional detection module 112, which may enforce rules based on alerts generated by main server 110. Regional server 120 may include a slave instance of time zone database 124, a slave instance of demographics database 126, and/or a slave instance of alerts database 118. In some embodiments, regional server 120 may only include a slave instance of alerts database 118 and may omit the time zone database 124 and demographics database 126. Regional detection module 112 may access alerts in slave instance of alerts database 118 and/or by receiving alerts from main server 110. Regional detection module 112 may enforce detection rules based on information gathered by main server 110 and/or validate numbers used for source and destination of calls entering the telephony system. Enforcement and validation are described in detail below.

Regional server 120 may be in communication with signaling server 130, which may be configured to allow or refuse call connections based on the enforcement and validation processing described herein. In the example of FIG. 1, signaling server 130 is depicted as a separate element from regional server 120 (e.g., a separate server in communication with regional server 120), but in some embodiments, signaling server 130 may be a component of regional server 120 or regional server 120 may be a component of signaling server 130. As described in greater detail below, regional server 120 may report call alerts to signaling server 130, and signaling server 130 may determine whether to allow or refuse calls based on the alerts.

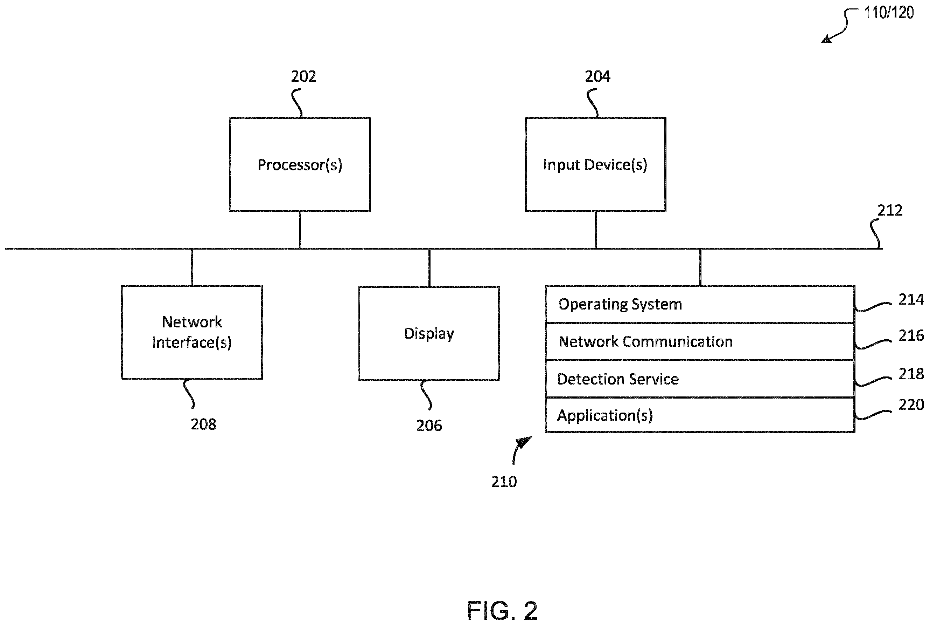

FIG. 2 is a block diagram of an example computing device that may implement various features and processes as described herein. For example, main server 110 and/or regional server 120 may have the configuration of the computing device of FIG. 2. Main server 110 and/or regional server 120 may be implemented on any electronic device that runs software applications derived from compiled instructions, including without limitation personal computers, servers, smart phones, media players, electronic tablets, game consoles, email devices, etc. In some implementations, main server 110 and/or regional server 120 may include one or more processors 202, one or more input devices 204, one or more display devices 206, one or more network interfaces 208, and one or more computer-readable mediums 210. Each of these components may be coupled by bus 212.

Display device 206 may be any known display technology, including but not limited to display devices using Liquid Crystal Display (LCD) or Light Emitting Diode (LED) technology. Processor(s) 202 may use any known processor technology, including but not limited to graphics processors and multi-core processors. Input device 204 may be any known input device technology, including but not limited to a keyboard (including a virtual keyboard), mouse, track ball, and touch-sensitive pad or display. Bus 212 may be any known internal or external bus technology, including but not limited to ISA, EISA, PCI, PCI Express, NuBus, USB, Serial ATA or FireWire. Computer-readable medium 210 may be any medium that participates in providing instructions to processor(s) 202 for execution, including without limitation, non-volatile storage media (e.g., optical disks, magnetic disks, flash drives, etc.), or volatile media (e.g., SDRAM, ROM, etc.).

Computer-readable medium 210 may include various instructions 214 for implementing an operating system (e.g., Mac OS®, Windows®, Linux). The operating system may be multi-user, multiprocessing, multitasking, multithreading, real-time, and the like. The operating system may perform basic tasks, including but not limited to: recognizing input from input device 204; sending output to display device 206; keeping track of files and directories on computer-readable medium 210; controlling peripheral devices (e.g., disk drives, printers, etc.) which can be controlled directly or through an I/O controller; and managing traffic on bus 212. Network communications instructions 216 may establish and maintain network connections (e.g., software for implementing communication protocols, such as TCP/IP, HTTP, Ethernet, telephony, etc.).

Detection service instructions 218 can include instructions for detection module 112 and/or regional detection module 122 as described herein. For example, detection service instructions 218 may monitor data for evidence of abusive traffic and/or restrict traffic that may be abusive.

Application(s) 220 may be an application that uses or implements the processes described herein and/or other processes. The processes may also be implemented in operating system 214.

The described features may be implemented in one or more computer programs that may be executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program may be written in any form of programming language (e.g., Objective-C, Java), including compiled or interpreted languages, and it may be deployed in any form, including as a stand-alone program or as a module, component, subroutine, or other unit suitable for use in a computing environment.

Suitable processors for the execution of a program of instructions may include, by way of example, both general and special purpose microprocessors, and the sole processor or one of multiple processors or cores, of any kind of computer. Generally, a processor may receive instructions and data from a read-only memory or a random access memory or both. The essential elements of a computer may include a processor for executing instructions and one or more memories for storing instructions and data. Generally, a computer may also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data may include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

To provide for interaction with a user, the features may be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features may be implemented in a computer system that includes a back-end component, such as a data server, or that includes a middleware component, such as an application server or an Internet server, or that includes a front-end component, such as a client computer having a graphical user interface or an Internet browser, or any combination thereof. The components of the system may be connected by any form or medium of digital data communication such as a communication network. Examples of communication networks include, e.g., a telephone network, a LAN, a WAN, and the computers and networks forming the Internet.

The computer system may include clients and servers. A client and server may generally be remote from each other and may typically interact through a network. The relationship of client and server may arise by virtue of computer programs running on the respective computers and having a client-server relationship to each other.

One or more features or steps of the disclosed embodiments may be implemented using an API. An API may define one or more parameters that are passed between a calling application and other software code (e.g., an operating system, library routine, function) that provides a service, that provides data, or that performs an operation or a computation.

The API may be implemented as one or more calls in program code that send or receive one or more parameters through a parameter list or other structure based on a call convention defined in an API specification document. A parameter may be a constant, a key, a data structure, an object, an object class, a variable, a data type, a pointer, an array, a list, or another call. API calls and parameters may be implemented in any programming language. The programming language may define the vocabulary and calling convention that a programmer will employ to access functions supporting the API.

In some implementations, an API call may report to an application the capabilities of a device running the application, such as input capability, output capability, processing capability, power capability, communications capability, etc.

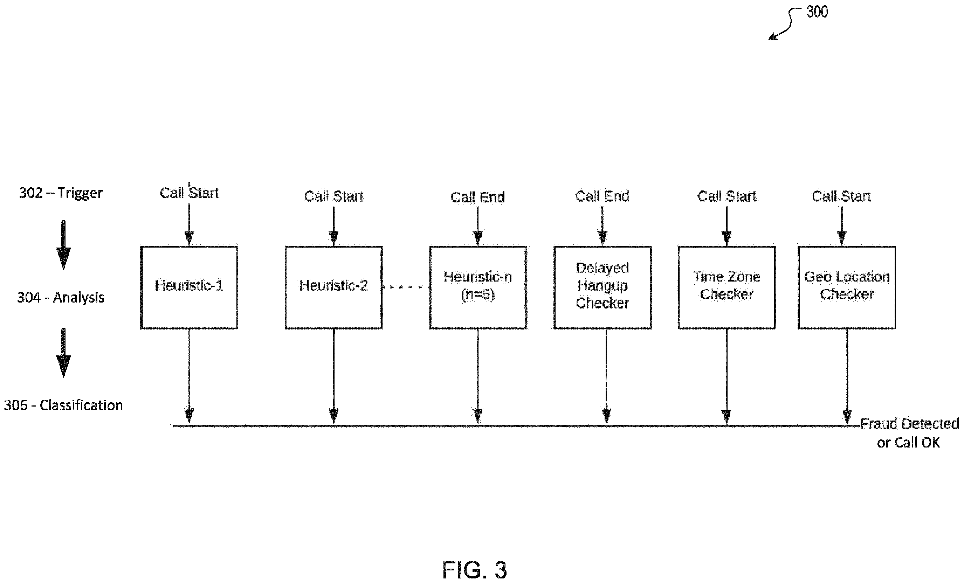

Figure 3 shows an example call analysis and classification process 300 according to an embodiment of the disclosure. For example, detection module 112 may perform process 300 as it receives call data 102, as described above.

At 302, detection module 112 may trigger a call analysis based on event data in call data 102. For example, event data triggering the analysis may include data indicating a call is starting or ending (e.g., a request to connect a call or a request to terminate a call). Depending on which type of event is detected (e.g., start or end), different types of analyses may be performed.

At 304, detection module 112 may analyze call data 102 to determine whether the requested call action is abusive or causing network inefficiency. For example, depending on whether the triggering event is a start or an end of a call, detection module 112 may apply one or more heuristics and/or tests to call data 102 to evaluate likelihood of the call being abusive or inefficient. Example heuristics may include, but are not limited to, the following:
- Number validation
- Heuristics on type, time, and amount of calls between source and destination at a given time
- Heuristics on call canceling behavior
- Number of calls between geo locations at a given time
- Number of calls between time zones at a given time
- Identification of false answer using voice analysis for identification of mechanical voice

At 306, detection module 112 may classify the call associated with the event on the basis of the analysis. For example, detection module 112 may classify the call as OK or suspicious. In some embodiments, detection module 112 may classify suspicious calls at various levels indicating a level of severity. When calls are flagged as suspicious, detection module 112 may indicate this by saving the alerts to abusive or network inefficiency database 118. As noted above, abusive or network inefficiency alert database 118 may be replicated across the zones to regional servers 120 for enforcement. Example call classifications may include, but are not limited to, the following:
- OK: Call is not suspicious
- Flagged: Call is suspicious, but the set of numbers used for it only failed once or is a failure for geo location or time zone pair (e.g., in some embodiments, geo location and time zone failures may not be escalated)
- Alert: Call failed twice in the network abuse test for its numbers
- Blocked: Call failed three times in the network abuse test for its numbers

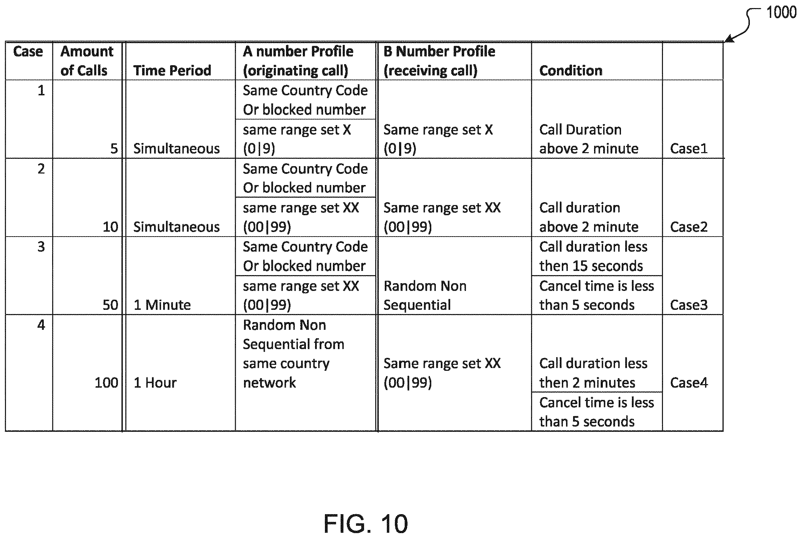

As noted above, detection module 112 may use one or more heuristics which may define alerted call patterns. A non-limiting set of sample heuristics is defined in table 1000 of FIG. 10.

Heuristic Case #1 may involve sets with 1 degree of freedom, simultaneous calls, being greater than 2 minutes in duration. String.trim(X) may be defined as the string (e.g., the phone number) without the right X digits.
1. Live calls from the same country may be grouped based on sequences <Source.trim(1),Desination.trim(1)>, up to 10 calls in a group (Difference may be only on the last digit).
2. Any pair <Source.trim(1),Destination.trim(1)> that has 5 calls or more with duration bigger than 2 minutes may not accept more calls.

Heuristic Case #2 may involve sets with 2 degrees of freedom being greater than 2 minutes in duration.
1. Live calls from the same country may be grouped based on sequences <Source.trim(2),Desination.trim(2)>, up to 100 calls in a group (Difference may be only on the two last digits).
2. Any pair <Source.trim(2),Destination.trim(2)> that has 10 calls or more with duration bigger than 2 minutes may not accept more calls.

Heuristic Case #3 may involve an originating set with 2 degrees of freedom, a call window with duration of 1 minute, calls belonging to the window with a duration shorter than 15 seconds or calls that are hung up within 5 seconds following initiation of call.

Finished calls may be grouped based on sequences <Source.trim(2)> .
1. Any sequence <Source.trim(2)> that had more than 50 calls n the last minute with duration < 15 seconds or cancel time < 5 seconds may not accept more calls.

Heuristic Case #4 may invlolve a destination set with 2 degrees of freedom, 1 minute window, short calls.
1. Finished calls may be grouped based on sequences <Destination.trim(2)>.
2. Any sequence <Source.trim(2)> that had more than 100 calls in the last minute with duration < 2 minutes or cancel time < 5 seconds may not accept more calls.

Detection module 112 may use network abuse detection components like heuristics, but detection module 112 is not limited to using heuristics for detection. Detection module 112 may use other techniques such as time zone rules testing, geo location testing, and/or delayed hang-up testing as described below, in addition to or instead of heuristics such as those described above.

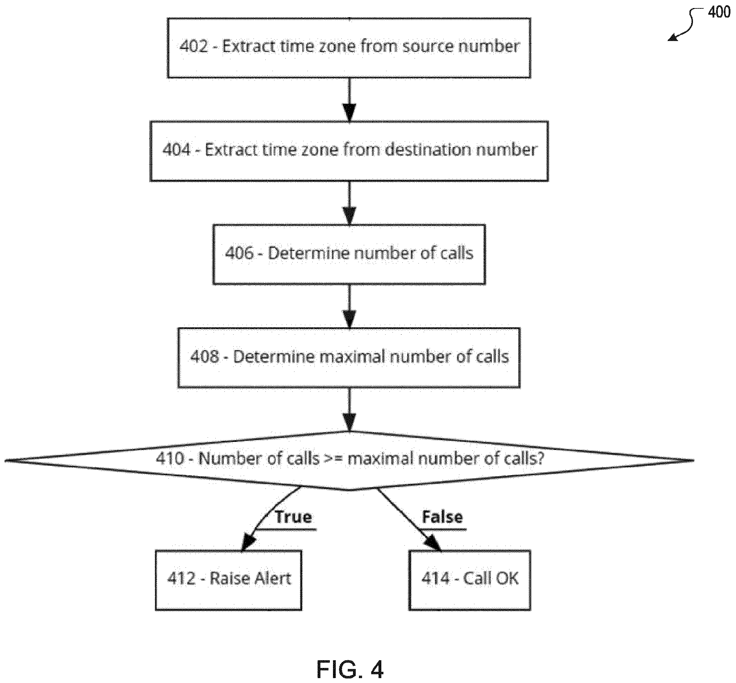

Figure 4 shows an example time zone rules testing process 400 according to an embodiment of the disclosure. For example, detection module 112 may perform process 400 upon detecting a call start in call data 102.

At 402, detection module 112 may identify a source phone number (e.g., the phone number of the entity attempting to place the call). Detection module 112 may determine a time zone of the call source based on the source phone number. For example, using country codes, area codes, and/or other location-based phone number coding, detection module 112 may determine the time zone from which the call is placed.

At 404, detection module 112 may identify a destination phone number (e.g., the phone number of the entity to which the call is to connect). Detection module 112 may determine a time zone of the call destination based on the destination phone number. For example, using country codes, area codes, and/or other location-based phone number coding, detection module 112 may determine the time zone to which the call is placed.

At 406, detection module 112 may determine a number of calls between the source phone number and destination phone number for a period of time. For example, by analyzing call record data, detection module 112 may determine the following: <Number of calls> - number of calls in the last hour for pair (source t, destination tz).

At 408, detection module 112 may determine a maximal number of calls allowed between the source phone number's time zone and destination phone number's time zone for a period of time. For example, one or more rules stored in main server 110 memory may establish limits on the number of calls allowed. Detection module 112 may determine the following: <maximal number of calls> - Maximal calls allowed for pair (source tz, destination tx) at this day and hour.

At 410, detection module 112 may determine whether the number of calls determined at 406 is greater than or equal to the maximal number of calls determined at 408. For example, detection module 112 may determine if <number of calls> >= <maximal number of calls>.

At 412, if <number of calls> >= <maximal number of calls>, detection module 112 may generate an alert. For example, detection module 112 may store the alert in alert database 118, which may be mirrored as alert database slave 128 at regional server 120, and/or otherwise communicate the alert to regional server 120.

At 414, if <number of calls> < <maximal number of calls>, detection module 112 may determine that the call is not in violation of the time zone rules. Assuming the call is not in violation of any of the other tests (e.g., see FIG. 3), detection module 112 may allow the call to proceed into the network for processing (e.g., including routing and connection).

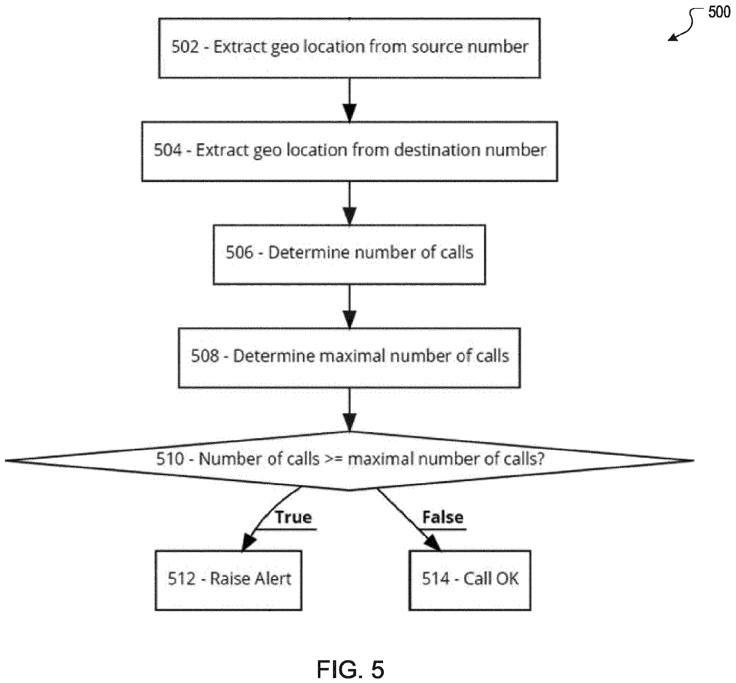

Figure 5 shows an example geolocation rules testing process 500 according to an embodiment of the disclosure. For example, detection module 112 may perform process 500 upon detecting a call start in call data 102.

At 502, detection module 112 may identify a source phone number (e.g., the phone number of the entity attempting to place the call). Detection module 112 may determine a geolocation of the call source based on the source phone number. For example, using country codes, area codes, and/or other location-based phone number coding, detection module 112 may determine the geolocation from which the call is placed.

At 504, detection module 112 may identify a destination phone number (e.g., the phone number of the entity to which the call is to connect). Detection module 112 may determine a geolocation of the call destination based on the destination phone number. For example, using country codes, area codes, and/or other location-based phone number coding, detection module 112 may determine the geolocation to which the call is placed.

At 506, detection module 112 may determine a number of calls between the source phone number and destination phone number for a period of time. For example, by analyzing call record data, detection module 112 may determine the following: <Number of calls> - number of calls in the last hour for pair (source t, destination tz).

At 508, detection module 112 may determine a maximal number of calls allowed between the source phone number's geolocation and destination phone number's geolocation for a period of time. For example, one or more rules stored in main server 110 memory may establish limits on the number of calls allowed. Detection module 112 may determine the following: <maximal number of calls> - Maximal calls allowed for pair (source tz, destination tx) at this day and hour.

At 510, detection module 112 may determine whether the number of calls determined at 506 is greater than or equal to the maximal number of calls determined at 508. For example, detection module 112 may determine if <number of calls> >= <maximal number of calls>.

At 512, if <number of calls> >= <maximal number of calls>, detection module 112 may generate an alert. For example, detection module 112 may store the alert in alert database 118, which may be mirrored as alert database slave 128 at regional server 120, and/or otherwise communicate the alert to regional server 120.

At 514, if <number of calls> < <maximal number of calls>, detection module 112 may determine that the call is not in violation of the geolocation rules. Assuming the call is not in violation of any of the other tests (e.g., see FIG. 3), detection module 112 may allow the call to proceed into the network for processing (e.g., including routing and connection).

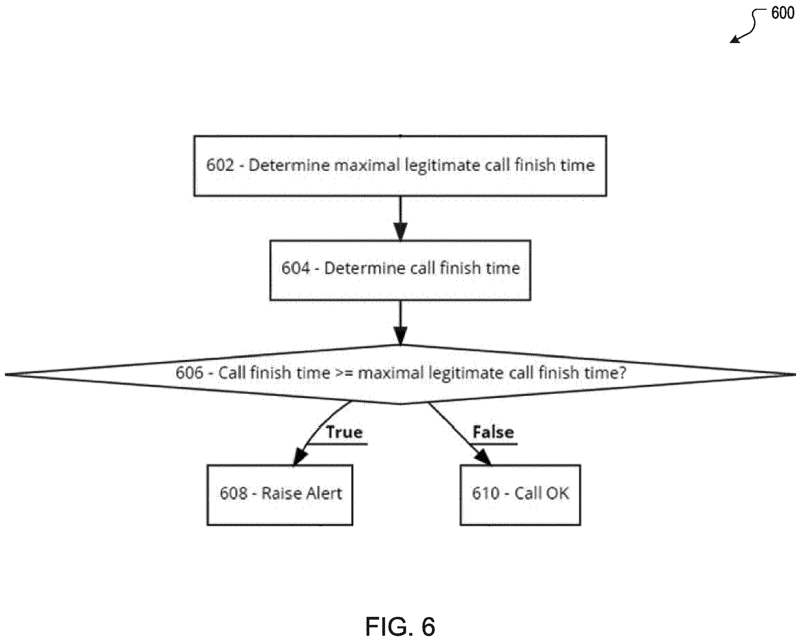

Figure 6 shows an example delayed hangup testing process 600 according to an embodiment of the disclosure. For example, detection module 112 may perform process 600 upon detecting a call end in call data 102.

At 602, detection module 112 may determine a maximal legitimate call finish time. For example, one or more rules stored in main server 110 memory may establish limits on the length of time for a call to terminate (e.g., after a call hangup). Detection module 112 may determine the following: ByeTimeToFinish = Call Finish Time - Call By Time.

At 604, detection module 112 may determine a call finish time for the call.

At 606, detection module 112 may determine whether the call finish time for the call at 604 is greater than or equal to the maximal legitimate call finish time determined at 602. For example, detection module 112 may determine if <ByteTimeToFinish> >= <MAXIMAL_LEGITIMATE_FINISH_TIME>.

At 608, if <ByteTimeToFinish> >= <MAXIMAL_LEGITIMATE_FINISH_TIME>, detection module 112 may generate an alert. For example, detection module 112 may store the alert in alert database 118, which may be mirrored as alert database slave 128 at regional server 120, and/or otherwise communicate the alert to regional server 120.

At 610, if <ByeTimeToFinish> < <MAXIMAL_LEGITIMATE_FINISH_TIME>, detection module 112 may determine that the call is not in violation of the call finish time rules. Assuming the call is not in violation of any of the other tests (e.g., see FIG. 3), detection module 112 may raise an alert if more than 10 calls to a set of numbers with one degree of freedom exhibit this behavior over a period of 1 hour. In such a case further calls to this set of numbers may be blocked.

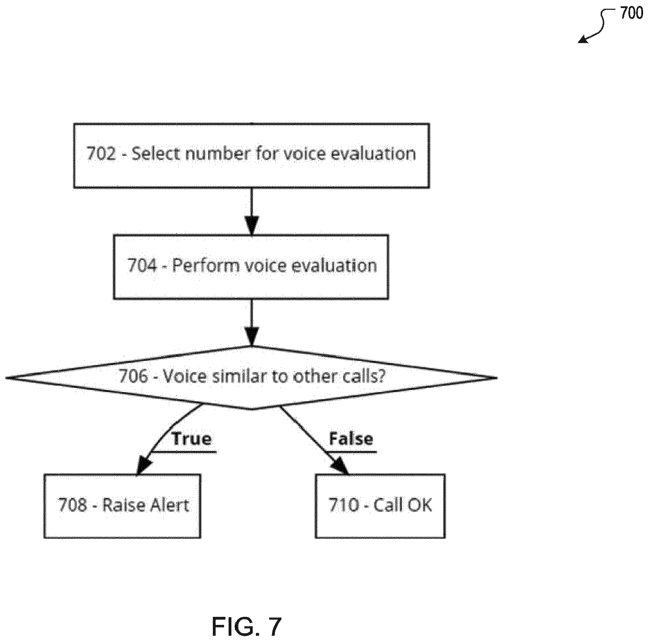

Figure 7 shows an example voice testing process 700 according to an embodiment of the disclosure. For example, detection module 112 may perform process 700 frequently or continuously as call data 102 comes in.

At 702, detection module 112 may select a called phone number for voice analysis. For example, detection module 112 may analyze call data 102 to identify requested call connections and select one or more requested calls for voice analysis. In some embodiments, detection module 112 may select a call for voice analysis if that call is to or from a previously-flagged number (e.g., classified as suspicious at 306 in process 300). In some embodiments, detection module 112 may select a call for voice analysis if some number is being called more than a certain number of times over the course of an hour.

At 704, detection module 112 may analyze the selected call. A number which is picked for voice analysis may be analyzed an AI powered voice analysis software. Voice vectors in call audio may be analyzed and determine whether they are the same as (or substantially similar to) voice vectors in other calls to the number being called (e.g., the same as or similar to more than 10 calls to that number or some other threshold).

At 706, if the voice analysis determines the audio is similar to the other voice vectors, detection module 112 may trigger a network abuse flag. In this case, the system may dial the number and record the call created by the system.

At 708, if the voice analysis determines the audio is not similar to the other voice vectors, detection module 112 may determine that the call is not in violation of the voice analysis rules. Assuming the call is not in violation of any of the other tests (e.g., see FIG. 3), detection module 112 may declare the called number as suspicious and block further calls to that number.

The preceding process descriptions provide examples of tests that detection module 112 may perform to determine whether a call is suspicious or not. In some embodiments, detection module 112 may perform multiple tests on a single call or call attempt. Based on these determinations, detection module 112 may adjust a call state, which may ultimately result in rejection or blockage of the call on network 100 if the call is sufficiently suspicious.

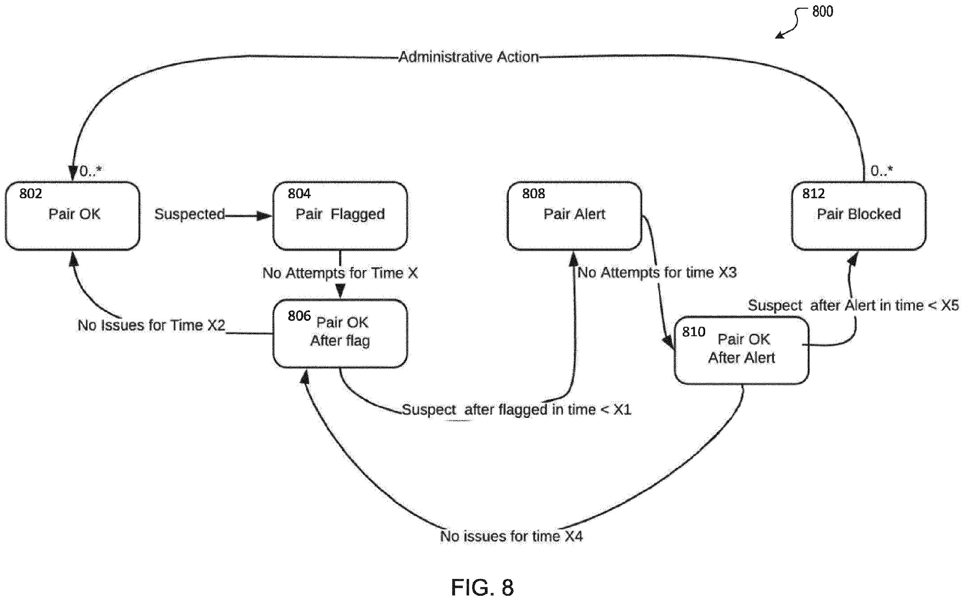

Figure 8 shows an example call escalation state diagram 800 according to an embodiment of the disclosure. State diagram 800 shows an example of how calls may be escalated from a state of OK (non-network abusive) to blocked according to the testing performed by detection module 112 as described above. For example, calls may be escalated as follows:
- OK- Non-network abusive calls.
- Flagged - Network abusive calls detected for a pair of numbers (call source and destination).
- Alert - Network abusive calls detected again not long after pair was flagged.
- Blocked - Too many occurrences of network abuse events occurred, connection is blocked until administrator enables it.

As shown in figure 8, escalation between states and de-escalation when calls are classified as legitimate may be based on a set of 6 timers.

A pair of number sets can be in one of 6 states, and may transition between the states based on testing as described above, in the following manner:
- Pair OK 802: No suspicion of abuse or network inefficiency for pair.
- Pair flagged 804: A suspected abuse or network inefficiency is detected for the pair of number sets.
- Pair OK after flagged 806: No further abuse or network inefficiency attempts were detected for a time of X seconds after entering flagged state.
- Pair alert 808: An attempt for abuse or network inefficiency was detected in time shorter than X1 after entering pair OK after flag state.
- Pair OK after alert 810: No abuse or network inefficiency attempts were discovered for a time of X3 seconds after entering alert state.
- Pair blocked 812: An abuse or network inefficiency attempt was detected at a time shorter than X5 after entering Pair OK after alert state.
- Moving from OK after flag 806 to OK 802: If no abuse or network inefficiency attempts were discovered in X2 time.
- Moving from Pair OK after alert 810 to Pair OK after flagged 806: If no abuse or network inefficiency attempts were discovered in X4 time.

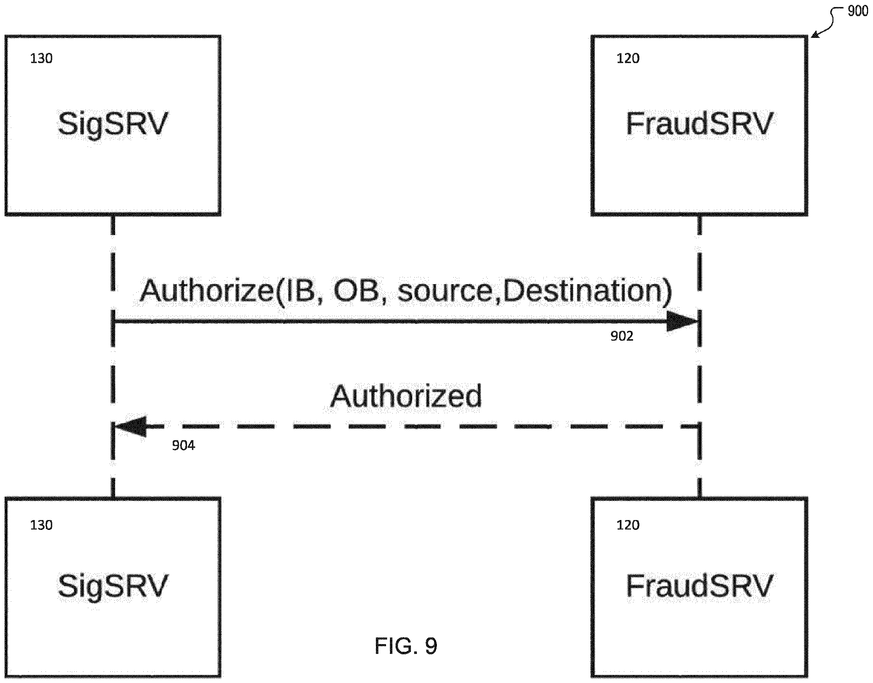

Figure 9 shows an enforcement process 900 according to an embodiment of the disclosure. As described above, regional server 120 may have access to abusive or causing network inefficiency analysis data generated by detection module 112. Signaling server 130 may be configured to receive incoming calls and either connect them through network 100 to their destinations or reject them. For example, when a call enters the telephony system it may go through signaling server 130. Signaling server 130 may resolve the inbound carrier for the call and the outbound carrier for the call. At 902, signaling server 130 may ask regional server 120, through an API, whether this call is network abusive. Based on the analysis processing described above, at 904, regional server 120 may respond with an indication about the call status (e.g., abusive or not abusive). Signaling server 130 may consult one or more rules (e.g., which may be stored in signaling server 130 memory or may be otherwise accessible to signaling server 130) to determine whether to allow or block the call based on its status. In the former case, signaling server 130 may cause the connection between call endpoints to be formed through network 100. In the latter case, signaling server 130 may reject the call, which may not enter network 100.

For example, upon receiving a call from signaling server at 902, regional server 120 may perform the following processes to generate the response sent at 904:
1. Check the validity of the numbers included in the call (source and destination).
2. Check the alert database to determine whether the pair of time zones (source, destination) has an alert
3. Check the alert database to determine whether the pair of geo locations of the numbers has an alert.
4. Check if any of the heuristics of the system has an alert for the number pair of the call.
5. Check if the destination number has an FAS alert.
6. If no alert is found in any of the components mentioned, regional server 120 may authorize the call.
7. If an alert is found, regional server 120 may consult the alert configuration for the inbound and outbound of the carriers whether call should be blocked. Carriers may define their policy regarding blocking suspicious calls. Carriers may decide whether to just set a warning or set a warning and actually block suspicious calls.
8. If the call should be blocked based on the alert configuration, regional server 120 may return an alert status and, in some embodiments, a block indication for the call to signaling server 130. Signaling server 130 may determine based on the alert status and/or block indication whether to block or allow the call.

While various embodiments have been described above, it should be understood that they have been presented by way of example and not limitation. It will be apparent to persons skilled in the relevant art(s) that various changes in form and detail can be made therein without departing from the spirit and scope. In fact, after reading the above description, it will be apparent to one skilled in the relevant art(s) how to implement alternative embodiments. For example, other steps may be provided, or steps may be eliminated, from the described flows, and other components may be added to, or removed from, the described systems. Accordingly, other implementations are within the scope of the following claims.

In addition, it should be understood that any figures which highlight the functionality and advantages are presented for example purposes only. The disclosed methodology and system are each sufficiently flexible and configurable such that they may be utilized in ways other than that shown.

Although the term "at least one" may often be used in the specification, claims and drawings, the terms "a", "an", "the", "said", etc. also signify "at least one" or "the at least one" in the specification, claims and drawings.

Finally, it is the applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

Also disclosed herein are the following numbered clauses:
1. A method for detecting and preventing unwanted network traffic comprising:
   detecting, by a processor of a detection server coupled to a telephony network, a call event that is currently ongoing;
   analyzing, by the processor, call data associated with the call event to determine that a call triggering the call event will cause an inefficiency on the telephony network in response to standard handling of the call by the telephony network; and
   causing, by the processor, the telephony network to handle the call in a non-standard manner, thereby preventing the inefficiency.
2. The method of clause 1, wherein the call event comprises a call start or a call end.
3. The method of clause 1, wherein the analyzing comprises at least one of:
   checking a validity of a source phone number for the call;
   checking a validiy of a destination phone number for the call;
   classifying the call based on at least one rule for at least one call pattern;
   classifying the call based on a number of calls between a time zone for the source phone number and a time zone for the destination phone number;
   classifying the call based on a number of calls between a location for the source phone number and a location for the destination phone number;
   detecting a false answer supervision; and
   detecting a fast cancel.
4. The method of clause 1, wherein the analyzing comprises flagging the call for additional analysis.
5. The method of clause 4, wherein the non-standard manner of handling the call comprises performing, by the processor, the additional analysis.
6. The method of clause 5, further comprising causing the telephony network to connect the call in response to the additional analysis determining that the call will not cause the inefficiency.
7. The method of clause 5, further comprising causing the telephony network to block the call in response to the additional analysis determining that the call will cause the inefficiency.
8. The method of clause 1, wherein the analyzing comprises generating an alert for the call.
9. The method of clause 8, wherein the non-standard manner of handling the call comprises analyzing, by a second processor of a regional server coupled to the telephony network, the alert to determine whether to block the call.
10. The method of clause 1, wherein the non-standard manner of handling the call comprises blocking, by a second processor of a regional server coupled to the telephony network, the call.
11. The method of clause 1, further comprising:
   detecting, by the processor, a second call event that is currently ongoing;
   analyzing, by the processor, call data associated with the second call event to determine that a second call triggering the second call event will not cause an inefficiency on the telephony network in response to standard handling of the second call by the telephony network; and
   causing, by the processor, the telephony network to handle the second call in a standard manner.
12. The method of clause 11, wherein the standard manner of handling the call comprises connecting the call.
13. A system for detecting and preventing unwanted network traffic comprising:
   a detection server coupled to a telephony network, the detection server comprising a processor configured to:
   detect a call event that is currently ongoing;
   analyze call data associated with the call event to determine that a call triggering the call event will cause an inefficiency on the telephony network in response to standard handling of the call by the telephony network; and
   cause the telephony network to handle the call in a non-standard manner, thereby preventing the inefficiency.
14. The system of clause 13, wherein the call event comprises a call start or a call end.
15. The system of clause 13, wherein the analyzing comprises at least one of:
   checking a validity of a source phone number for the call;
   checking a validiy of a destination phone number for the call;
   classifying the call based on at least one rule for at least one call pattern;
   classifying the call based on a number of calls between a time zone for the source phone number and a time zone for the destination phone number;
   classifying the call based on a number of calls between a location for the source phone number and a location for the destination phone number;
   detecting a false answer supervision; and
   detecting a fast cancel.
16. The system of clause 13, wherein the analyzing comprises flagging the call for additional analysis.
17. The system of clause 16, wherein the processor is configured to perform the additional analysis.
18. The system of clause 17, wherein the processor is configured to cause the telephony network to connect the call in response to the additional analysis determining that the call will not cause the inefficiency.
19. The system of clause 17, wherein the processor is configured to cause the telephony network to block the call in response to the additional analysis determining that the call will cause the inefficiency.
20. The system of clause 13, wherein the analyzing comprises generating an alert for the call.
21. The system of clause 20, further comprising a regional server coupled to the telephony network comprising a second processor configured to perform the non-standard manner of handling the call by analyzing the alert to determine whether to block the call.
22. The system of clause 13, further comprising a regional server coupled to the telephony network comprising a second processor configured to perform the non-standard manner of handling the call by blocking the call.
23. The system of clause 13, wherein the processor is configured to:
   detect a second call event that is currently ongoing;
   analyze call data associated with the second call event to determine that a second call triggering the second call event will not cause an inefficiency on the telephony network in response to standard handling of the second call by the telephony network; and
   cause the telephony network to handle the second call in a standard manner.
24. The system of clause 23, further comprising a regional server coupled to the telephony network comprising a second processor configured to perform the standard manner of handling the call by connecting the call.

## Claims

1. A method for detecting and preventing unwanted network traffic comprising:
detecting, by a processor of a detection server coupled to a telephony network, a call event that is currently ongoing;
analyzing, by the processor, call data associated with the call event to determine that a call triggering the call event will cause an inefficiency on the telephony network in response to standard handling of the call by the telephony network; and
causing, by the processor, the telephony network to handle the call in a non-standard manner, thereby preventing the inefficiency.

2. The method of claim 1, wherein the call event comprises a call start or a call end.

3. The method of claim 1, wherein the analyzing comprises at least one of:
checking a validity of a source phone number for the call;
checking a validity of a destination phone number for the call;
classifying the call based on at least one rule for at least one call pattern;
classifying the call based on a number of calls between a time zone for the source phone number and a time zone for the destination phone number;
classifying the call based on a number of calls between a location for the source phone number and a location for the destination phone number;
detecting a false answer supervision; and
detecting a fast cancel.

4. The method of claim 1, wherein the analyzing comprises flagging the call for additional analysis, and optionally wherein the non-standard manner of handling the call comprises performing, by the processor, the additional analysis, and further optionally the system further comprising either:
causing the telephony network to connect the call in response to the additional analysis determining that the call will not cause the inefficiency, or
causing the telephony network to block the call in response to the additional analysis determining that the call will cause the inefficiency.

5. The method of claim 1, wherein the analyzing comprises generating an alert for the call, and optionally wherein the non-standard manner of handling the call comprises analyzing, by a second processor of a regional server coupled to the telephony network, the alert to determine whether to block the call.

6. The method of claim 1, wherein the non-standard manner of handling the call comprises blocking, by a second processor of a regional server coupled to the telephony network, the call.

7. The method of claim 1, further comprising:
detecting, by the processor, a second call event that is currently ongoing;
analyzing, by the processor, call data associated with the second call event to determine that a second call triggering the second call event will not cause an inefficiency on the telephony network in response to standard handling of the second call by the telephony network; and
causing, by the processor, the telephony network to handle the second call in a standard manner, and optionally wherein the standard manner of handling the call comprises connecting the call.

8. A system for detecting and preventing unwanted network traffic comprising:
a detection server coupled to a telephony network, the detection server comprising a processor configured to:
detect a call event that is currently ongoing;
analyze call data associated with the call event to determine that a call triggering the call event will cause an inefficiency on the telephony network in response to standard handling of the call by the telephony network; and
cause the telephony network to handle the call in a non-standard manner, thereby preventing the inefficiency.

9. The system of claim 8, wherein the call event comprises a call start or a call end.

10. The system of claim 8, wherein the analyzing comprises at least one of:
checking a validity of a source phone number for the call;
checking a validiy of a destination phone number for the call;
classifying the call based on at least one rule for at least one call pattern;
classifying the call based on a number of calls between a time zone for the source phone number and a time zone for the destination phone number;
classifying the call based on a number of calls between a location for the source phone number and a location for the destination phone number;
detecting a false answer supervision; and
detecting a fast cancel.

11. The system of claim 8, wherein the analyzing comprises flagging the call for additional analysis, and optionally wherein the processor is configured to perform the additional analysis, and further optionally wherein the processor is configured to either:
cause the telephony network to connect the call in response to the additional analysis determining that the call will not cause the inefficiency, or
cause the telephony network to block the call in response to the additional analysis determining that the call will cause the inefficiency.

12. The system of claim 8, wherein the analyzing comprises generating an alert for the call, and optionally the system further comprising a regional server coupled to the telephony network comprising a second processor configured to perform the non-standard manner of handling the call by analyzing the alert to determine whether to block the call.

13. The system of claim 8, further comprising a regional server coupled to the telephony network comprising a second processor configured to perform the non-standard manner of handling the call by blocking the call.

14. The system of claim 8, wherein the processor is configured to:
detect a second call event that is currently ongoing;
analyze call data associated with the second call event to determine that a second call triggering the second call event will not cause an inefficiency on the telephony network in response to standard handling of the second call by the telephony network; and
cause the telephony network to handle the second call in a standard manner.

15. The system of claim 14, further comprising a regional server coupled to the telephony network comprising a second processor configured to perform the standard manner of handling the call by connecting the call.
